# EUROPÄISCHE PATENTSCHRIFT

(11) **EP 0 817 167 B1**
(45) Veröffentlichungstag und Bekanntmachung des Hinweises auf die Patenterteilung: **02.05.2003**
(21) Anmeldenummer: 97110167.0
(22) Anmeldetag: 21.06.1997
(51) Int. Cl.: G10L 15/20

(54) **Spracherkennungsverfahren und Anordnung zum Durchführen des Verfahrens**
Speech recognition method and device for carrying out the method
Procédé de reconnaissance de la parole et dispositif de mise en oeuvre du procédé

(30) Priorität: 25.06.1996 DE 19625294
(43) Veröffentlichungstag der Anmeldung: 07.01.1998
(73) Patentinhaber: Harman Becker Automotive Systems (Becker Division) GmbH, 76307 Karlsbad (DE)
(72) Erfinder: Scheppach, Frank, 89231-Neu-Ulm (DE)
(74) Vertreter: Grünecker, Kinkeldey, Stockmair & Schwanhäusser Anwaltssozietät

(56) Entgegenhaltungen:
- EP-A- 0 451 796
- US-A- 4 833 713
- HIRSCH H G ET AL: "AUTOMATIC SPEECH RECOGNITION IN A NOISY ENVIRONMENT" PROCEEDINGS OF THE EUROPEAN CONFERENCE ON SPEECH COMMUNICATION AND TECHNOLOGY (EUROSPEECH), PARIS, SEPT. 26 - 28, 1989, Bd. VOL. 2, Nr. CONF. 1, 1. September 1989, Seiten 652-655, XP000214313 TUBACH J P;MARIANI J J

## Beschreibung

Die Erfindung betrifft ein Spracherkennungsverfahren gemäß Oberbegriff des Patentanspruchs 1 sowie eine Anordnung zum Durchführen des Verfahrens gemäß Oberbegriff des Patentanspruchs 7.

Es wurden bereits Spracherkennungsverfahren vorgeschlagen z.B in der Druckschrift EP-A-0 451 796, bei denen eingehende Sprachsignale über eine Vorverarbeitungseinheit einer Spracherkennungseinheit zugeleitet werden und erst dort dem eigentlichen Spracherkennungsprozeß unterworfen werden. In der Vorverarbeitungseinheit werden die eingehenden Sprachsignale einer Merkmalsextraktion, einer Segmentierung und einer Klassifizierung nach dem Energiegehalt unterzogen. Bei diesem Verfahren werden nur diejenigen Segmente in der Spracherkennungseinheit weiterverarbeitet, deren Energiegehalt einen vorgebbaren oder adaptiv ermittelten Energie-Schwellenwert überschreitet. Mit dieser Maßnahme sollen störende Nebengeräusche wie z.B. Atemgeräusche, Papiergeknister, Tastaturklappern, Geräusche von Maschinen und Geräten, die während der Spracheingabe oder des Sprachdialogs auftreten, ausgeblendet werden. Akustische Signale, die den Energie-Schwellenwert überschreiten, werden in der Spracherkennungseinheit daraufhin untersucht, welchem Wort bzw. welchen Wortfolgen sie am wahrscheinlichsten entsprechen.

Dabei vergleicht die Spracherkennungseinheit die eingehenden Signale mit abgespeicherten Referenzsignalen (die bestimmten Worten entsprechen) und stellt dasjenige Referenzsignal fest, das die größte Übereinstimmung mit dem zu klassifizierenden Eingangssignal aufweist und das auch aufgrund einer Plausibilitätsprüfung von Bedeutungsinhalt des zugehörigen Wortes her nicht auszuschließen ist.

Da bei diesem Verfahren die Segmentierung und Weiterleitung an die Spracherkennungseinheit nur in Abhängigkeit von der Signalenergie erfolgt, werden neben den echten Sprachsignalen auch laute Nebengeräusche der Spracherkennungseinheit zugeführt und dort zwangsweise dem Spracherkennungsprozeß unterzogen mit der Folge, daß störenden lauten Nebengeräuschen, die den vorgegebenen Energie-Schwellenwert überschreiten in der Spracherkennungseinheit zwangsweise ein Wort bzw. eine Wortfolge zugeordnet wird.

Dies führt entweder dazu, daß die Spracherkennungseinheit aufgrund einer nachfolgenen Plausibilitätsprüfung zu keinem Ergebnis kommt und dann das Gesamtsignal (echtes Sprachsignal und störendes Nebengeräusch) als unsinning verwirft, oder dazu, daß dem echten Sprachsignal im Erkennungsprozeß ein falscher Bedeutungsinhalt bzw. ein falsches Wort oder eine falsche Wortfolge zugeordnet, deren Wahl zu Fehlern in der weiteren Verarbeitung dieser Worte bzw. Wortfolgen führt.

Dies führt beispielweise dazu, daß bei einem per Spracheingabe zu bedienenden Telefon in einem Kraftfahrzeug (Kfz) die gewünschte Telefonverbindung nicht zustande kommt, da das Spracherkennungssystem des Telefons die einsprochenen Ziffern der Telefonnummer des Teilnehmers, den der Telefonbediener anrufen möchte, wegen störender Nebengeräusche im Kfz falsch interpretiert und aufgrund der inkorrekt erkannten Ziffern entweder keine oder eine falsche Telefonverbindung herstellt.

Die Bedienung eines solchen Spracherkennungssystems erfordert eine hohe Disziplin des Sprechers bei der Spracheingabe sowie eine relativ ruhige Umgebung.

Um störende Nebengeräusche ausblenden zu können, wurde bereits vorgeschlagen, all die Nebengeräusche, die mit einer gewissen Wahrscheinlichkeit auftreten, als Referenzmuster für Nichtworte dem Spracherkennungssystem zur Verfügung zu stellen.

Mit einem solchen Verfahren können diese Nebengeräusche zwar im Spracherkennungsprozeß als solche erkannt und eliminert werden. Neu auftretende und nicht als Referenzmuster gespeicherte Nebengeräusche durchlaufen jedoch auch den gesamten Erkennungsprozeß und werden je nachdem, welches der gespeicherten Referenzmuster für Sprache oder Nichtworte ihnen am ähnlichsten ist, entweder (im günstigsten Fall) einem der abgespeicherten Nichtworte zugeordet mit der Folge, daß sie nicht weiter berücksichtigt werden, oder (im ungünstigsten Fall) einem der abgespeicherten Worte bzw. Wortfolgen zugeordnet mit der Folge, daß sie weiterhin im Spracherkennungsprozeß berücksichtigt werden, was zu unsinnigen Ergebnissen führen kann.

Die Druckschrift US-A-4 833 713 offenbart eine Sprachaktivitätsdetektion, die einerseits die spektrale Energieverteilung der Eingangssignalsegmente beobachtet, um Sprachsignalsegmente zu detektieren. Zum anderen unterbricht sie die Spracherkennung, falls die mittlere Energie über mehrere Eingangssignalsegmente unter einen Mindestwert fällt.

Die Aufgabe der Erfindung besteht darin, zum einen ein Spracherkennungsverfahren zu schaffen, das eine möglichst hohe Robustheit aufweist und möglichst unempfindlich ist gegenüber störenden Nebengeräuschen bei der Spracheingabe, sowie zum anderen eine Anordnung zum Durchführen des Verfahrens zu schaffen, die möglichst einfach im Aufbau ist.

Die erfindungsgemäße Lösung der Aufgabe ist im Hinblick auf das zu schaffende Verfahren durch die kennzeichnenden Merkmale des Patentanspruchs 1 wiedergegeben und im Hinblick auf die zu schaffende Anordnung durch die kennzeichnenden Merkmale des Patentanspruchs 7.

Ein wesentlicher Vorteil der erfindungsgemäßen Lösung ist darin zu sehen, daß störende Nebengeräusche bereits in der Vorverarbeitungseinheit zuverlässig als solche erkannt werden und gar nicht erst der Spracherkennungseinheit zugeleitet werden. Dadurch wird die Spracherkennungseinheit merklich entlastet mit der Folge, daß der Rechneraufwand bzw. die Rechenzeit erheblich verringert werden können.

Zudem entfällt die Notwendigkeit, typisch auftretende Nebengeräusche als Nichtwort-Referenzmuster in der Spracherkennungseinheit abspeichern zu müssen.

Da sowohl typische als auch atypische Nebengeräusche in der Vorverarbeitungseinheit als solche erkannt und eliminiert werden, arbeitet das erfindungsgemäße Verfahren mit einer sehr hohen Erkennungswahrscheinlichkeit für die eingesprochenen Sprachsignale. Die nach dem Verfahren arbeitende erfindungsgemäße Anordnung zeichnet sich daher durch ihre hohe Robustheit und Erkennungszuverlässigkeit selbst in erheblich nebengeräuschbehafteten Sprachumgebungen wie z.B. in Kraftfahrzeugen oder in Produktionsstätten bzw. Maschinenhallen aus.

Im folgenden wird die Erfindung anhand der Figuren näher erläutert. Es zeigen
- FIG. 1: das Blockschaltbild eines Teils eines bevorzugten Ausführungsbeispiels der erfindungsgemäßen Anordnung zum Durchführen des erfindungsgemäßen Verfahrens.
- FIG. 2: den zeitlichen Verlauf eines Sprachsignals mit eingezeichneten Segmentierungsintervallen für die der Spracherkennungseinheit zugeleiteten Sprachsignalteile bei einem Verfahren nach dem Stand der Technik (FIG. 2a) und bei einer bevorzugten Ausführungsform des erfindungsgemäßen Verfahrens gemäß FIG. 3 (FIG. 2b).
- FIG. 3: das Flußdiagramm einer bevorzugten Ausführungsform des erfindungsgemäßen Verfahrens.

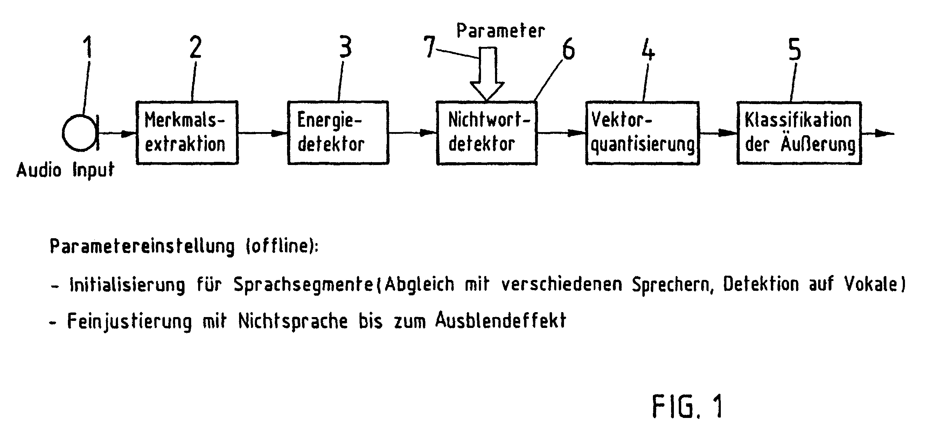

Das in FIG. 1 gezeigte Spracherkennungssystem besteht aus einer Spracheingabeeinheit (z.B. einem Mikrophon) 1, das ausgangsseitig an eine Merkmalsextraktionseinheit 2 angeschlossen ist. Die Merkmalsextraktionseinheit 2 ist ausgangsseitig an einen Energiedetektor 3 angeschlossen, dem ein Nichtwortdetektor 6 nachgeschaltet ist. Diesem wiederum ist eine Vektorquantisierungseinheit 4 nachgeschaltet, an die sich eine Klassifizierungseinheit 5 anschließt. Die sich daran anschließende - an sich bekannte - Signalverarbeitungs- und -ausgabeeinheit des Spracherkennunssystems ist nicht gezeigt und bildet auch nicht den Gegenstand der vorliegenden Erfindung. Während die Merkmalsextraktionseinheit 2, der Energiedetektor 3 und der Nichwortdetektor 6 zur Vorverarbeitungseinheit des Spracherkennungssystems gehören, sind die Vektorquantisierungseinheit 4 und die Klassifikationseinheit 5 bereits Teil des eigentlichen Spracherkenners.

Die Einstellung und Funktionsweise der einzelnen in FIG. 1 gezeigten Funktionseinheiten (mit Ausnahme des Nichtwortdetektors 6) sind an sich bekannt und werden daher hier an dieser Stelle nicht weiter erläutert.

Der Nichtwortdetektor 6 wird off-line über bestimmte vorgegebene Parameter 7 eingestellt. Zum einen wird eine Initialisierung für Sprachsegmente durchgeführt (Abgleich mit verschiedenen Sprechern bzw. Detektion auf Vokale usw.), zum anderen erfolgt in dieser Phase anschließend eine Feinjustierung mit Nichtsprachsignalen (Geräuschen), bei der die Ausblendung solcher Singale eingestellt wird.

### Zur Funktionsweise der Anordnung:

Über die Spracheingabeeinheit 1 eingehende Signale (Sprachsignale und Geräusche) werden in der Merkmalsextraktionseinheit 2 in Merkmalsvektoren zerlegt, die anschließend im Energiedetektor 3 daraufhin untersucht werden, ob sie einen vorgegebenen oder adaptiv ermittelten Energie-Schwellenwert überschreiten oder nicht.

Nur diejenigen Segmente, deren Energiegehalt diesen ersten Energie-Schwellenwert überschreiten, werden dem nachfolgenden Nichtwortdetektor zugeleitet.

Dort werden sie daraufhin untersucht und klassifiziert, ob sie aus einem Sprachsignal oder aus einem Nichtsprachsignal abgeleitet sind. Während die als von einem Nicht-Sprachsignal abgeleitet klassifizierten Segmente bei der weiteren Signalverarbeitung ausgeblendet, d.h. eliminiert werden, werden die als von einem Sprachsignal abgeleiteten klassifizierten Segmente der Vektorquantisierungseinheit 4, d.h. der eigentlichen Spracherkennungseinheit zugeleitet und dort weiterverarbeitet.

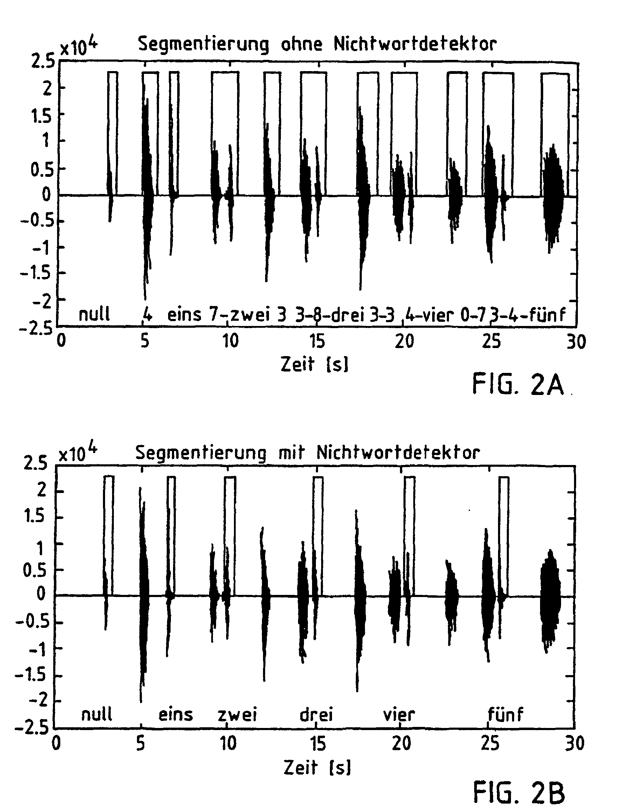

Wie drastisch sich diese Ausblendung der Nichtsprachsignale auf die weitere Verarbeitung auswirken kann, ist beispielhaft in FIG. 2 gezeigt.

Dort ist der zeitliche Verlauf der Amplitude eines Sprachsignals gezeigt, bei dem die Ziffernfolge "null, eins, zwei, drei, vier, fünf" als Worte gesprochen eingegeben worden sind (in der Figur sind unter die entsprechenden (echten) Sprachsignale die Ziffern ausgeschrieben worden).

Die Ziffern wurden von Atemgeräuschen unterbrochen in das System eingegeben, die in FIG. 2 im zeitlichen Verlauf des Sprachsignals ebenfalls sichtbar sind.

In FIG. 2a ist ferner die Energiesegmentierung gezeigt, wie sie in einem herkömmlichen Spracherkenner ohne Nicht-Sprachsignaldetektor ("Nichtwortdetektor") erfolgt. Alle Signalanteile, die den vorgegebenen oder adaptiv ermittelten Energie-Schwellenwert überschreiten, sind in in der Figur in Rechtecke eingefaßt worden. Hierzu zählen neben den tatsächlich eingesprochenen Ziffern 0 bis 5 auch die Atemgeräusche zwischen den Ziffereingaben. Dem Spracherkenner standen in diesem Beispiel als Referenz-Vokabularium nur die Ziffern 0 bis 9 zur Verfügung. Das heißt alle dem Spracherkenner zugeleiteten Signale (egal ob Sprachsignal oder Atemgeräusch), die den vorgegebenen oder adaptiv ermittelten Energie-Schwellenwert überschritten hatten, wurden im eigentlichen Spracherkenner zwangsweise diesen als Referenzmuster abgespeicherten Ziffern zugeordnet.

Dementsprechend wurden zwar die gesprochenen Ziffern 0 bis 5 richtig erkannt. Jedoch wurden die Atemgeräusche nicht als solche erkannt, sondern es wurde ihnen jeweils eine Ziffer aus dem Vokabularium des Spracherkenners zugeordnet, die in der Figur jeweils als Zahl dargestellt worden ist. Bindestriche zwischen den Zahlen stehen hier für im Verbundwortmodus erkannte Signale.

In FIG. 2b ist der zeitliche Verlauf desselben Sprachsignals gezeigt. Hier wurde jedoch zusätzlich in der Vorverarbeitungseinheit ein Nicht-Sprachsignaldetektor eingesetzt, und zwar in einer Anordnung gemäß FIG. 1. Während bei diesem System die eingesprochenen Ziffern 0 bis 5 eindeutig als Sprachsignal erkannt und klassifiziert worden sind (in der FIG. 2a erkennbar an den Rechtecken über den entsprechenden Signalteilen), sind die Atemgeräusche eindeutig als Nicht-Sprachsignale erkannt und für die weitere Verarbeitung ausgeblendet worden. Als Sprachsignale erkannt wurden mit diesem System folgerichtig nur die eingesprochenen Ziffern 0 bis 5 (in FIG. 2b unter den Signalanteilen als Ziffer dargestellt).

Dieser Vergleich unterstreicht die Robustheit des erfindungsgemäßen Verfahrens gegenüber störenden Nebengeräuschen.

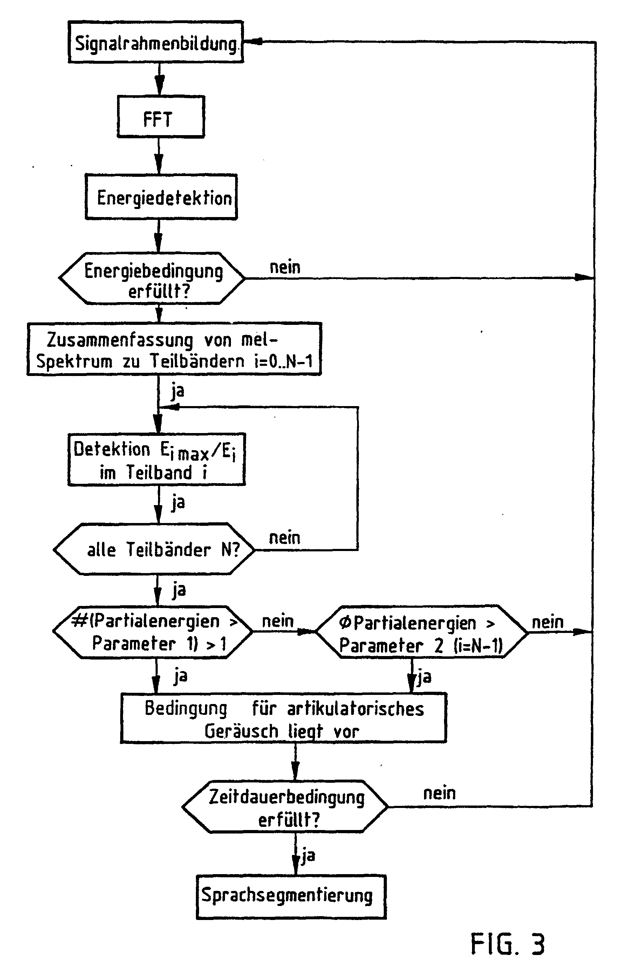

Die Funktionsweise des Nicht-Sprachsignaldetektors (4 in FIG. 1) wird im folgenden anhand des Flußdiagramms der FIG. 3 näher erläutert.

Das Zeitsignal des eingsprochenen Sprachsignals wird zunächst einem Signalrahmenbildungsprozeß unterworfen und anschließend in den Spektralbereich transformiert. Dies geschieht hier beispielhaft mit Hilfe einer Fast-Fourier-Transformation (FFT). Die transformierten Signale werden anschließend dem Energiedetektor zugeleitet. Dort wird geprüft, ob die Signale in ihrem Energiegehalt einen vorgegebenen oder - alternativ hierzu - einen adaptiv ermittelten Energie-Schwellenwert überschreiten oder nicht. Wird der Schwellenwert nicht überschritten, wird das untersuchte Signal im weiteren Verlauf der Signalverarbeitung nicht mehr berücksichtigt ("ausgeblendet"), und das nächstfolgende Signal wird dem Energiedetektor zugeleitet (diese Möglichkeit ist in der FIG. 3 durch den "nein"-Pfeil graphisch dargestellt). Überschreitet das Signal jedoch mit seinem Energiegehalt den ersten Energie-Schwellenwert, wird das Signal im Nicht-Sprachsignaldetektor wie folgt weiter verarbeitet.

Zunächst wird das Signalspektrum gemäß der an sich bekannten mel-Skala in Teilbereiche aufgeteilt. Unter dem Begriff mel-Skala versteht man eine nichtlineare Aufteilung des hörbaren Frequenzbereichs, die an die Hörcharakteristik des menschlichen Ohres angepaßt ist (vgl. hierzu z.B. Rabiner, L.; Biing-Hwang, J.: "Fundamentals of Speech Recognition" (Prentice Hall, Englewood Cliffs, New Jersey, 1993, Seiten 183 bis 186). Das melskalierte Spektrum wird anschließend in Teilbändern i mit i = 0,1, 2, ..., N-1 zusammengefaßt.

Danach werden in einem rekursiven Verfahren (dargestellt in FIG. 3 durch den zugehörigen "nein"-Pfeil) alle Teilbänder separat untersucht und der in ihnen jeweils vorhandene partielle Energiegehalt, bestehend aus dem Maximum der Energie,
E_{i,max} des Teilbandes, normiert auf den Gesamtenergiegehalt Eᵢ des Teilbandes i, festgestellt.

Wenn die normierten partiellen Energiegehalte aller Teilbänder i feststehen, wird im nächsten Verfahrensschritt die Anzahl der Teilbänder i ermittelt, deren partielle Energiegehalte einen vorgegebenen Parameter 1 überschreiten (in der Figur steht das Symbol # für den Begriff "Anzahl").

Überschreitet der partielle Energiegehalt von mehr als einem Teilband und von weniger als N Teilbändern den vorgegebenen Parameter 1, werden die Bedingungen für ein artikulatorisches Geräusch als erfüllt angesehen und das Signal weiterverarbeitet.

Wird diese Bedingung jedoch nur von einem Teilband i erfüllt (in FIG. 3 dargestellt durch den zugehörigen "nein"-Pfeil), wird auf der Basis aller Teilbänder i = 0, ..., N-1 zusätzlich der durchschnittliche partielle Energiegehalt gebildet und mit einem vorgegebenen Parameter 2 verglichen.

Liegt dieser Durchschnittswert über dem Parameter 2 und der gleichzeitig individuelle partielle Energiegehalt von (im Beispiel) einem Teilband über dem Parameter 1, so werden die Bedingungen für ein artikulatorisches Geräusch als erfüllt angesehen und das Signal weiterverarbeitet.

Wird diese zweifache Bedingung (individueller partieller Energiebehalt von einem Teilband größer als Parameter 1 und gleichzeitig durchnittlicher Energiegehalt aller Teilbänder größer als Parameter 2) nicht erfüllt, wird ebenso wie für den Fall, daß der individuelle partielle Energiegehalt von allen N Teilbändern i (i = 0,1, ..., N-1) jeweils größer als Parameter 1 ist, das untersuchte Signal als ein nichtartikulatorisches Signal angesehen und im weiteren Verlauf der Signalverarbeitung nicht mehr berücksichtigt ("ausgeblendet"). Anschließend wird der nächstfolgende Signalrahmen dem Energiedetektor zugeleitet (in FIG. 3 ist dieser Fall durch den zugehörigen "nein"-Pfeil graphisch dargestellt).

Liegt der individuelle partielle Energiebehalt von mindestens zwei Teilbändern i über dem Parameter 1 oder - bei Nichterfüllung dieser Bedingung - liegt zumindest der durchschnittliche partielle Energiegehalt von allen N Teilbändern i (i = 0, 1, ..., N-1) über dem Parameter 2 sowie der partielle Energiegehalt von einem Teilband über dem Parameter 1, wird das Signal zusammen mit den nachfolgenden Signalen, die ebenfalls die zuvor beschriebene Energiegehaltsprüfung durchlaufen haben, daraufhin überprüft, ob die Anzahl der diese Bedingungen erfüllenden Signalrahmen eine vorgegebene Anzahl von Signalrahmen entsprechend einer vorgegebenen Zeitdauer überschreitet oder nicht.

Überschreitet diese Folge von Signalrahmen die vorgegebene Zeitdauer, werden die Bedingungen für ein Sprachsignal als erfüllt angesehen und die Folge von Signalrahmen der weiteren Verarbeitung (Klassifikationsprozeß) zugeleitet.

Überschreitet diese Folge von Signalen die vorgegebene Zeitdauer jedoch nicht, werden die Bedingungen für ein Sprachsignal nicht als erfüllt angesehen und nach dem allgemein bekannten First-In-First-Out-Prinzip das älteste dieser Signale von der weiteren Signalverarbeitung ausgeschlossen sowie anschließend der nächste Signalrahmen dem Energiedetektor zugeleitet (in FIG. 3 durch den "nein"-Pfeil graphisch dargestellt).

Das Verfahren zeichnet sich durch folgende Vorteile aus:
- Aufwendiges Training zur Modellierung von stimmlosen, artikulatorischen und nichtartikulatorischen Störungen kann entfallen.
- Hierdurch nicht erforderliche Referenzmuster oder Modelle ersparen Speicherplatz.
- Einsparung von Rechenaufwand bei Nachverarbeitung zugunsten einer beschleunigten Endauswertung.
- Einstellung der Parameter erfordert nur wenige Sprecher für sprecherunabhängige Nichtwortdetektion.

Es versteht sich, daß die Erfindung nicht auf die dargestellten Ausführungsbeispiele beschränkt ist, sondern vielmehr auf weitere übertragbar ist.

Es lassen sich beispielsweise die Parameter für den Nichtwortdetektor adaptiv oder über eine vorgegebene Datenbasis individuell auf die jeweilige Anwendung bezogen einstellen.

Ferner ist es z.B. möglich, anstelle der FFT andere Transformationsverfahren einzusetzen, um das anstehende Zeitsignal in den Spektralbereich zu transformieren.

Auch ist es möglich, bei der Entscheidung, ob die Bedingungen für ein artikulatorisches Geräusch vorliegen, auf der Basis der durchschnittlichen und individuellen partiellen Energiegehalte die Mindestzahl j der Teilbänder, deren partieller Energiegehalt über dem Parameter 1 liegen muß, damit die Bedingungen für ein artikulatorisches Geräusch als erfüllt angesehen werden, individuell für den Anwendungszweck anzupassen (von z.B. j = 2 auf j = 3 oder 5 oder 10 usw.; allgemein 1 < j < N). Entsprechend kann auch für den Fall, daß'als zweite Bedingung der durchschnittliche partielle Energiegehalt bestimmt und mit einem zweiten Parameter verglichen werden muß, die Zahl k der Teilbänder, deren partieller Energiegehalt den ersten Parameter zumindest überschritten haben muß, individuell für den Anwendungszweck angepaßt werden (1 ≤ k < j).

Ferner kann die Anzahl N der Teilbänder i an den individuellen Anwendungszweck angepaßt werden.

Schließlich ist es möglich, den Energie-Schwellenwert selbst an die jeweilige Anwendung anzupassen, d.h. zu erhöhen oder zu erniedrigen. Auch die vorgegebene Zeitdauer, die die einzelnen Signalfolgen erfüllen müssen, damit die Bedingungen für ein Sprachsignal als erfüllt angesehen werden, kann dementsprechend an den individuellen Anwendungszweck angepaßt, d.h. verlängert oder verkürzt werden.

Auch können anstelle der Energiedetektoren auch Pitchdetektoren eingesetzt werden (oder beide Detektorarten in Kombination betrieben werden).

## Patentansprüche

1. Spracherkennungsverfahren, bei dem eingehende Sprachsignale über eine Vorverarbeitungseinheit einer Spracherkennungseinheit zugeleitet werden und dort einem Spracherkennungsprozess unterworfen werden, wobei mittels der Vorverarbeitungseinheit die eingehenden Sprachsignale einer Merkmalsextraktion, einer Segmentierung in Segmente und einer Klassifizierung unter Berücksichtigung des Energiegehalts unterzogen werden, und
der gesamte Energiegehalt der Segmente jeweils mit einem vorgegebenen oder adaptiv ermittelten Energie-Schwellenwert verglichen wird,
**dadurch gekennzeichnet, dass** nur diejenigen Segmente, deren gesamter Energiegehalt den Energie-Schwellenwert überschreitet, unter Berücksichtigung des Energiegehalts daraufhin untersucht und klassifiziert werden, ob sie aus einem Sprachsignal oder einem Nicht-Sprachsignal abgeleitet sind,
und dass nur die als aus einem Sprachsignal abgeleitet klassifizierten Segmente dem Spracherkennungsprozess unterworfen werden.

2. Spracherkennungsverfahren nach Anspruch 1, **dadurch gekennzeichnet,**
- **daß** die Merkmalsextraktion eine Spektraltransformation beinhaltet und die spektral transformierten und in ihrem Energiegehalt den vorgegebenen oder adaptiv ermittelten Energie-Schwellenwert überschreitenden Segmente nach einer vorgegebenen mel-Skala in spektrale Bereiche aufgeteilt und anschließend die spektralen Bereiche in Teilbänder i mit i = 0,1,2 ... N-1 zusammengefaßt werden;
- **daß** in allen Teilbändern i jeweils der als das auf den Gesamtenergiegehalt Eᵢ des jeweiligen Teilbandes i normierte Maximum der Energie E_{i,max} des jeweiligen Teilbandes i definierte partielle Energiegehalt des jeweiligen Teilbandes bestimmt wird;
- **daß** anschließend die partiellen Energiegehalte aller Teilbänder i mit einem vorgegebenen ersten Parameter (Parameter 1) verglichen werden und
- **daß** bei Überschreiten des ersten Parameters (Parameter 1) durch die partiellen Energiegehalte von j Teilbändern, 1 < j < N, vorgegebene Bedingungen für das Vorliegen eines artikulatorischen Geräusches als erfüllt angesehen werden und das zugehörige Segment des Sprachsignals weiterverarbeitet wird.

3. Spracherkennungsverfahren nach Anspruch 2, **dadurch gekennzeichnet,**
- **daß** bei Segmenten, bei denen der partielle Energiegehalt nur von j - k Teilbändern, 1 < j < N und 1 ≤ k < j, den vorgegebenen ersten Parameter (Parameter 1) überschreitet, anschließend der durchschnittliche partielle Energiegehalt aus allen partiellen Energiegehalten des jeweiligen Segments oder aus einem Teil dieser partiellen Energiegehalte des jeweiligen Segments gebildet und mit einem vorgegebenen zweiten Parameter (Parameter 2) verglichen wird und
- **daß** bei Überschreiten des zweiten Parameters (Parameter 2) durch den durchschnittlichen partiellen Energiegehalt die vorgegebenen Bedingungen für das Vorliegen eines artikulatorischen Geräusches als erfüllt angesehen werden und das zugehörige Segment des Sprachsignals weiterverarbeitet wird.

4. Spracherkennungsverfahren nach einem der Ansprüche 2 oder 3, **dadurch gekennzeichnet, daß** für den Fall, daß die partiellen Energiegehalte aller Teilbänder i den vorgegebenen ersten Parameter (Parameter 1) überschreiten oder daß der partielle Energiegehalt von keinem der Teilbänder i den vorgegebenen ersten Parameter (Parameter 1) überschreitet, oder für den Fall, daß zwar der partielle Energiegehalt von j-k Teilbändern den ersten Parameter (Parameter 1) überschreitet, aber der durchschnittliche partielle Energiegehalt nicht den zweiten Parameter (Parameter 2) überschreitet, die vorgegebenen Bedingungen für das Vorliegen eines artikulatorischen Geräusches nicht als erfüllt angesehen werden und das zugehörige Segment von der weiteren Verarbeitung ausgeschlossen wird.

5. Spracherkennungsverfahren nach einem der vorhergehenden Ansprüche 2 bis 4, **dadurch gekennzeichnet, daß** j = 2 gewählt ist.

6. Spracherkennungsverfahren nach einem der Ansprüche 2 bis 5, **dadurch gekennzeichnet, daß**, sofern für eine vorgegebene Anzahl von aufeinander folgenden Segmenten die Bedingungen für das Vorliegen eines artikulatorischen Geräusches als erfüllt angesehen werden, diese Gruppe von Segmenten als Sprachsignal klassifiziert und weiterverarbeitet wird.

7. Anordnung, **dadurch gekennzeichnet, dass** sie zum Durchführen jedes Schrittes des Verfahrens nach einem der vorhergehenden Ansprüche angepaßt ist, mit einer Merkmalsextraktionseinheit (2), einem der Merkmalsextraktionseinheit (2) nachgeschalteten Energiedetektor (3), einem dem Energiedetektor (3) nachgeschalteten Nichtwortdetektor (6), einer dem Nichtwortdetektor (6) nachgeschalteten Vektorquantisierungseinheit (4) und einer der Vektorquantisierungseinheit (4) nachgeschalteten Klassifizierungseinheit (5).

## Claims

1. A speech-recognition method wherein incoming speech signals are supplied via a preprocessing unit to a speech-recognition unit and are subjected therein to a speech-recognition process, the incoming speech signals being subjected by means of the preprocessing unit to an extraction of features, to a segmentation into segments and to a classification taking the energy content into account and the total energy content of the segments being compared in each case with a preset or adaptively ascertained energy threshold value, **characterised in that**
only those segments having a total energy content exceeding the energy threshold value are examined and classified, taking the energy content into account, as to whether they are derived from a speech signal or a non-speech signal,
and only the segments classified as being derived from a speech signal are subjected to the speech-recognition process.

2. Speech-recognition method according to Claim 1, **characterised in that**
- the extraction of features includes a spectral transformation, and the segments that have been spectrally transformed and that exceed in their energy content the preset or adaptively ascertained energy threshold value are split up into spectral ranges according to a preset mel scale and subsequently the spectral ranges are combined into sub-bands i with i = 0, 1, 2 ... N-1;
- in all the sub-bands i the partial energy content of the respective sub-band, which is defined as the maximum of the energy E_{i,max} of the respective sub-band i normalized to the total energy content Eᵢ of the respective sub-band i, is determined in each case;
- subsequently the partial energy contents of all the sub-bands i are compared with a preset first parameter (Parameter 1) and
- when the first parameter (Parameter 1) is exceeded by the partial energy contents of j sub-bands, 1 < j < N, preset conditions for the presence of an articulatory sound are regarded as being fulfilled and the associated segment of the speech signal is subjected to further processing.

3. Speech-recognition method according to Claim 2, **characterised in that**
- in the case of segments in which the partial energy content of only j - k sub-bands, 1 < j < N and 1 ≤ k < j, exceeds the preset first parameter (Parameter 1), subsequently the average partial energy content is formed from all the partial energy contents of the respective segment or from some of these partial energy contents of the respective segment and is compared with a preset second parameter (Parameter 2) and
- when the second parameter (Parameter 2) is exceeded by the average partial energy content, the preset conditions for the presence of an articulatory sound are regarded as being fulfilled and the associated segment of the speech signal is subjected to further processing.

4. Speech-recognition method according to one of Claims 2 or 3, **characterised in that** in the case where the partial energy contents of all the sub-bands i exceed the preset first parameter (parameter 1) or the partial energy content of none of the sub-bands i exceeds the preset first parameter (Parameter 1) or in the case where although the partial energy content of j-k sub-bands exceeds the first parameter (Parameter 1) the average partial energy content does not exceed the second parameter (Parameter 2), the preset conditions for the presence of an articulatory sound are not regarded as being fulfilled and the associated segment is excluded from the further processing.

5. Speech-recognition method according to one of the preceding Claims 2 to 4, **characterised in that** j = 2 is chosen.

6. Speech-recognition method according to one of Claims 2 to 5, **characterised in that** to the extent that the conditions for the presence of an articulatory sound are regarded as being fulfilled for a preset number of consecutive segments this group of segments is classified as a speech signal and is subjected to further processing.

7. An arrangement, **characterised in that** it is adapted for implementing each step of the method according to one of the preceding claims, with a feature-extraction unit (2), an energy detector (3) connected downstream of the feature-extraction unit (2), a non-word detector (6) connected downstream of the energy detector (3), a vector-quantization unit (4) connected downstream of the non-word detector (6) and a classification unit (5) connected downstream of the vector-quantization unit (4).

## Revendications

1. Procédé de reconnaissance de la parole, selon lequel des signaux vocaux arrivants sont envoyés par l'intermédiaire d'une unité de prétraitement à une unité de reconnaissance vocale et y sont soumis à un processus de reconnaissance vocale, selon lequel les signaux vocaux arrivants sont soumis au moyen de l'unité de prétraitement, à une extraction de caractéristiques, à une segmentation formant des segments et à une classification en tenant compte du contenu en énergie, et le contenu total en énergie des segments est comparé respectivement à une valeur de seuil d'énergie prédéterminée ou déterminée de façon adaptative,
**caractérisé en ce**
**que** seuls les segments, dont le contenu total en énergie dépasse la valeur de seuil d'énergie, sont examinés et classés en tenant compte du contenu en énergie, pour déterminer s'ils sont dérivés d'un signal vocal ou d'un signal non vocal, et
**que** seuls les segments classés comme étant dérivés d'un signal vocal, sont soumis à un processus de reconnaissance vocale.

2. Procédé de reconnaissance vocale selon la revendication 1, **caractérisé en ce**
- **que** l'extraction de caractéristiques inclut une transformation spectrale et les segments transformés spectralement et dont le contenu en énergie dépasse le valeur de seuil d'énergie prédéterminée ou déterminée de façon adaptative, sont réunis selon une échelle de mels prédéterminée dans des plages spectrales et ensuite les plages spectrales sont rassemblées dans des bandes partielles i avec i = 0, 1, 2, ... N-1;
- **que** dans toutes les bandes partielles i, respectivement le contenu partiel en énergie de la bande partielle respective, qui est défini comme étant le maximum de l'énergie E_{i,max} de la bande partielle respective i, normalisé en étant rapporté au contenu total en énergie de Eᵢ de la bande partielle respective, est déterminé;
- **qu'**ensuite les teneurs partielles en énergie de toutes les bandes partielles i sont comparées à un premier paramètre prédéterminé (paramètre 1); et
- **que** lors de dépassements du premier paramètre (paramètre 1) par les teneurs partielles en énergie de j bandes partielles, 1 < j < N, des conditions prédéterminées par la présence d'un bruit d'articulation sont considérées comme satisfaites, et le segment associé du signal vocal continue à être traité.

3. Procédé de reconnaissance vocale selon la revendication 2, **caractérisé en ce**
- **que** dans le cas de segments, dans lesquels la teneur partielle en énergie de seulement j - k bandes partielles, i < j < N et i ≤ k ≤ j, dépasse le premier paramètre prédéterminé (paramètre 1), ensuite la teneur partielle moyenne en énergie est formée à partir de toutes les teneurs partielles en énergie du segment respectif ou à partir d'une partie de cette teneur en énergie partielle du segment respectif et est comparée à un second paramètre prédéterminé (paramètre 2), et
- **que** lors du dépassement du second paramètre (paramètre 2) par la teneur moyenne partielle en énergie, les conditions prédéterminées par la présence d'un bruit d'articulation sont considérées comme satisfaites et le segment associé du signal vocal continue à être traité.

4. Procédé de reconnaissance vocale selon l'une des revendications 2 ou 3, **caractérisé en ce que** dans le cas où les contenus partiels en énergie des bandes i dépassent le premier paramètre prédéterminé (paramètre 1) ou que le contenu partiel en énergie d'aucune des bandes partielles i ne dépasse le premier paramètre prédéterminé (paramètre 1), ou dans le cas où assurément le contenu partiel en énergie de j - k bandes partielles dépasse le premier paramètre (paramètre 1), mais que le contenu partiel moyen en énergie ne dépasse pas le second paramètre (paramètre 2), les conditions prédéterminées pour la présence d'un bruit d'articulation ne sont pas considérées comme satisfaites et le segment associé est exclu de la suite du traitement.

5. Procédé de reconnaissance vocale selon l'une des revendications précédentes 2 à 4, **caractérisé en ce que** l'on choisit j = 2.

6. Procédé de reconnaissance vocale selon l'une des revendications 2 à 5, **caractérisé en ce que**, dans la mesure où pour un nombre prédéterminé de segments successifs, les conditions de la présence d'un bruit d'articulation sont considérées comme satisfaites, ce groupe de segments est classé comme signal vocal et continue à être traité en tant que signal vocal.

7. Dispositif **caractérisé en ce qu'**il est adapté pour exécuter chaque étape du procédé selon l'une des revendications précédentes, comportant une unité (2) d'extraction de caractéristiques, un détecteur d'énergie (3) branché en aval de l'unité (2) d'extraction de caractéristiques, un détecteur (6) d'éléments qui ne sont pas des mots, branchés en aval du détecteur d'énergie, une unité de quantification vectorielle (4) branchée en aval du détecteur (6) d'éléments qui ne sont pas des mots, et une unité de classification (5) branchée en aval de l'unité de quantification vectorielle.
